# EUROPÄISCHE PATENTSCHRIFT

(11) **EP 0 819 916 B1**
(45) Veröffentlichungstag und Bekanntmachung des Hinweises auf die Patenterteilung: **12.05.2004**
(21) Anmeldenummer: 97111999.5
(22) Anmeldetag: 15.07.1997
(51) Int. Cl.: G01D 11/24, G12B 9/02, G12B 17/08, H05K 5/06

(54) **Wasserdichte Schutzvorrichtung mit aufgenommenem Mess- oder Anzeigegerät**
Waterproof enclosure holding a measuring instrument or an indicating device
Enceinte étanche avec un instrument de mesure ou un appareil d'affichage

(30) Priorität: 18.07.1996 DE 29612454 U
(43) Veröffentlichungstag der Anmeldung: 21.01.1998
(73) Patentinhaber: Testo GmbH & Co., 79853 Lenzkirch (DE)
(72) Erfinder: Derr, Andreas, 79793 Degernau (DE); Zahn, Patrick, 79871 Eisenbach (DE)
(74) Vertreter: Patentanwälte Westphal, Mussgnug & Partner

(56) Entgegenhaltungen:
- EP-A- 0 419 755
- DE-U- 9 001 055
- GB-A- 2 296 314
- US-A- 5 199 239
- PATENT ABSTRACTS OF JAPAN vol. 96, no. 2, 29.Februar 1996 & JP 07 288567 A (CANON INC), 31.Oktober 1995,

## Beschreibung

Die Erfindung betrifft eine wasserdichte Schutzvorrichtung zur Aufnahme eines Meß- oder Anzeigegerätes, gemäß Oberbegriff des Anspruchs 1.

Derartige Schutzvorrichtungen dienen der wasser- und staubdichten Aufnahme von Meß- oder Anzeigegeräten, wobei die Bedienung des Geräts durch die Schutzvorrichtung nicht beeinträchtigt werden soll. Bekannte Schutzvorrichtungen bestehen aus flexiblen, transparenten Schutzhüllen nach Art von Beuteln, die wasser- und staubdicht verschlossen werden können. Die Bedienungsmöglichkeit eines in die Schutzhülle eingebrachten Meß- oder Anzeigegerätes, bleibt aufgrund der Flexibilität der Hülle erhalten. Um die Flexibilität zu wahren, sind derartige Schutzhüllen aus einem relativ dünnen Kunststoffmaterial gefertigt, wodurch die Haltbarkeit derartiger Hüllen unter den oft rauhen Einsatzbedingungen, denen Meßgeräte ausgesetzt sind, begrenzt ist. Unter extremen Einsatzbedingungen besteht oft die Gefahr, daß das Meß- oder Anzeigegerät infolge äußerer Krafteinwirkung beschädigt wird, da die dünne Schutzhülle kaum Kräfte aufnehmen kann.

Weiterhin nachteilig bei bekannten Schutzhüllen ist die Tatsache, daß bereits geringe Verletzungen der Schutzhüllenoberfläche genügen, um Wasserdichtigkeit nicht mehr zu gewährleisten. Auch ist das Befestigen eines Meßgeräts an einer vorgesehenen Halterung kaum möglich, wenn sich das Meßgerät in der Schutzhülle befindet.

Der Erfindung lag das Problem zugrunde, die eingangs genannte Schutzvorrichtung so weiterzubilden, daß sie die geschilderten Nachteile nicht mehr aufweist, insbesondere soll neben der Wasserdichtigkeit durch die Schutzvorrichtung ein gewisser Schutz eines eingebrachten Meß- oder Anzeigegerätes vor äußerer Krafteinwirkung gegeben sein.

Dieses Problem wird mit einer Schutzvorrichtung der eingangs genannten Art durch die Merkmale des kennzeichnenden Teils des Anspruchs 1 gelöst. Danach ist die Schutzvorrichtung als Schutzgehäuse (Holster) aus einem formstabilen Material gefertigt, wobei die Innenkontur des Schutzgehäuses derart gestaltet ist, daß das Meß- oder Anzeigegerät weitgehend spielfrei einsetzbar ist. Weiterhin weist das Schutzgehäuse einen transparenten elastisch nachgebenden Bedienbereich auf.

Die Erfindung basiert auf der Idee, die bisher verwendeten labilen Schutzhüllen durch ein formstabiles Gehäuse zu ersetzen, bei dem durch eine geeignete Materialwahl die Bedien- und Anzeigelemente des eingesetzten Meß- oder Anzeigegeräts durch die Gehäusewandung hindurch sichtbar bleiben und weiterhin betätigt werden können. Das weitgehend spielfreie Umfassen des Meß- oder Anzeigegeräts bietet einen optimalen Schutz gegenüber äußeren Krafteinwirkungen. Die so gestaltete Schutzvorrichtung ist weitgehend unempfindlich gegenüber insbesondere scharfkantigen Gegenständen, die die Oberfläche der Schutzvorrichtung verletzen können, da die Wanddicke sehr viel größer ist als bei den Schutzhüllen, wodurch sich die Haltbarkeit der Schutzvorrichtung erhöht.

Weiterbildungen der Erfindung sind Gegenstand der Unteransprüche.

Eine Ausführungsform der Schutzvorrichtung nach der Erfindung sieht vor, die Innenkontur der Schutzvorrichtung weitgehend formschlüssig der Kontur des Meß- oder Anzeigegerätes anzupassen, so daß sie nach Art eines Überzugs minimale Abmessungen der Schutzvorrichtung bietet.

Um ein Meß- oder Anzeigegerät beliebig oft in die Schutzvorrichtung einsetzen oder aus dieser herausnehmen zu können, ist bevorzugt vorgesehen, die Schutzvorrichtung aus einem Gehäuseunterteil und einem Gehäuseoberteil, die lösbar miteinander verbunden sind, zu gestalten.

Die Verbindung von Gehäuseunterteil und Gehäuseoberteil kann bevorzugt mittels einer umlaufenden Nut bzw. eines umlaufenden Stegs erfolgen, die jeweils am Gehäuseunterteil oder am Gehäuseoberteil derart angebracht sind, daß beim Verbinden des Gehäuseoberteils mit dem Gehäuseunterteil der Steg in die Nut eingreift, wobei durch die Verwendung elastisch nachgebenden Materials in Verbindung mit einem zumindest geringfügigen Übermaß des Stegs gegenüber der Nut eine besonders gute Dichtwirkung zwischen beiden Gehäuseteilen erreicht wird. Die Dichtwirkung der Verbindung zwischen Gehäuseoberteil und Gehäuseunterteil kann durch das Anbringen von Dichtlippen an der Nut und/oder an dem Steg zusätzlich erhöht werden.

Eine weitere Ausführungsform der Erfindung sieht vor, das Gehäuseoberteil mittels eines Scharniers, beispielsweise eines Filmscharniers, am Gehäuseunterteil zu befestigen, wodurch ein Verlegen eines der beiden Teile verhindert werden kann.

Um volle Bedienfähigkeit des in die Schutzvorrichtung eingebrachten Meß- oder Anzeigegeräts zu gewährleisten, ist an der Schutzvorrichtung ein Bedienbereich vorgesehen, hinter dem sich das Bedien- und/oder Anzeigenfeld des jeweils eingebrachten Meß- oder Anzeigegeräts befindet. Eine Ausführungsform der Erfindung sieht vor, den Bedienbereich des Schutzgehäuses aus einem Gehäuseabschnitt verringerter Wanddicke auszubilden. Um beispielsweise die Bedienung von am Meß- oder Anzeigegerät befindlichen Tasten zu gewährleisten, sollte der Bedienbereich durch Fingerdruck ausreichend elastisch deformierbar sein. Aus herstellungstechnischer Sicht günstig ist es, den Bedienbereich einstückig mit dem Schutzgehäuse und aus demselben Material zu fertigen.

Als Material zur Herstellung des beschriebenen Schutzgehäuses kommt beispielsweise transparentes Weich-PVC in Frage. Bei Verwendung eines derartigen Materials ist die Herstellung einer Schutzvorrichtung möglich, die nicht nur im Bedienbereich, sondern vollständig transparent ist. Weiterhin kommen zur Herstellung des Schutzgehäuses vorzugsweise thermoplastische Elastomere (TPE) oder thermoplastische Polyurethane (TPU) in Frage.

Eine weitere Ausführungsform sieht vor, vorzugsweise auf einer dem Bedienbereich abgewandten Seite Aussparungen vorzusehen, die der Befestigung des Schutzgehäuses einschließlich des darin aufgenommenen Meß- oder Anzeigegerätes an einer zugehörigen Halterung dienen können. Um eine erhöhte Verwindungssteifigkeit der Schutzvorrichtung und damit eine verbesserte Handhabbarkeit zu erreichen, ist bei einer weiteren Ausführungsform der Schutzvorrichtung mindestens eine Verstärkungsleiste vorgesehen, die aus demselben Material wie das Schutzgehäuse besteht. Die Verstärkungsleiste bietet ferner einen erhöhten Schutz des in der Schutzvorrichtung befindlichen Meß- oder Anzeigegerätes vor von außen einwirkender Krafteinwirkung.

Um ein in die Schutzvorrichtung eingesetztes Meß- oder Anzeigegerät beispielsweise mit einem Meßfühler oder anderen peripheren Geräten verbinden zu können, ist in der Schutzvorrichtung eine Öffnung vorgesehen, durch die ein Stecker wasserdichtend hindurchgeführt und mit dem Meß- oder Anzeigegerät verbunden werden kann.

Die Dichtwirkung im Bereich der Öffnung kann besonders einfach dadurch sichergestellt sein, daß die Form und Größe der Öffnung derart an die Form und Größe des Steckers angepaßt sind, daß das Schutzgehäuse im Bereich der Öffnung vollflächig und damit wasserdichtend am Stecker anliegt. Eine weitere Ausführungsform sieht vor, eine Dichtlippe in der Öffnung anzubringen, die an dem hindurchgeführten Stecker oder an dem Gehäuse des Meß- oder Anzeigegeräts umlaufend Linienberührung hat und damit wasserdichtend anliegt. Diese Variante hat den Vorteil, daß der Stecker mit geringem Kraftaufwand durch die Öffnung hindurchgeführt werden kann.

Ferner besteht die Möglichkeit, einen Aufstellbügel mittels eines Scharniers an dem Schutzgehäuse anzubringen. Vorteilhafterweise dienen die Aussparungen, mittels derer das Schutzgehäuse an einer Halterung befestigbar ist, auch zur drehbar gelagerten Befestigung des Aufstellbügels. Das Schutzgehäuse kann mittels des aus- und einklappbaren Aufstellbügels auf einer Unterlage aufgestellt werden.

Vorzugsweise ist an einer einer Entnahmeöffnung gegenüberliegenden Seite ein Bereich reduzierter Wanddicke an dem Schutzgehäuse vorgesehen. Dieser Bereich ist durch einen Benutzer deformierbar, um das eingesetzte Meß- oder Anzeigegerät zur Entnahme in Richtung der Entnahmeöffnung zu verschieben. Das Meß- und Anzeigegerät liegt vorteilhafterweise mittels eines Stößels an dem Bereich reduzierter Wanddicke an.

Die Erfindung wird nachfolgend im Zusammenhang mit Ausführungsbeispielen anhand von Figuren näher erläutert. Es zeigen
- Fig. 1-3:: Ausführungsformen einer Schutzvorrichtung nach der Erfindung im Querschnitt.
- Fig. 4:: Eine perspektivische Ansicht eines Gehäuseunterteils, in das ein Meß- oder Anzeigegerät teilweise eingebracht ist.
- Fig. 5:: Eine Vorderansicht einer Schutzvorrichtung nach der Erfindung, mit eingebrachtem Meß- oder Anzeigegerät, wobei ein Gehäuseoberteil in der Darstellung nicht vollständig auf ein Gehäuseunterteil aufgesteckt ist.
- Fig. 6:: Perspektivische Ansicht eines Schutzgehäuses mit ausgeklapptem Aufstellbügel.

In den nachfolgenden Figuren bezeichnen, sofern nicht anders angegeben, gleiche Bezugszeichen gleiche Teile mit gleicher Bedeutung.

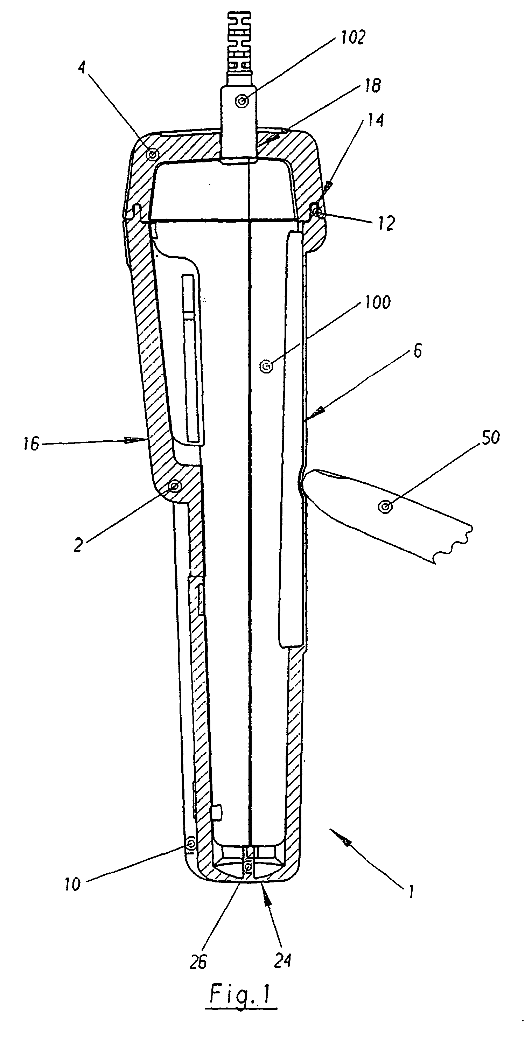

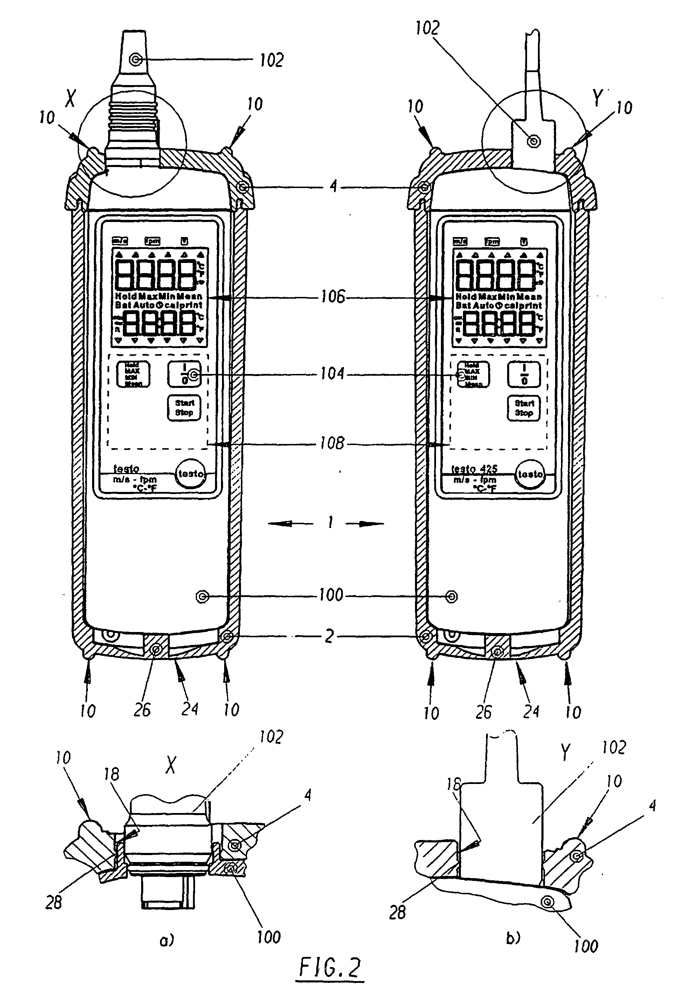

In den Fig. 1 bis 3 sind Ausführungsbeispiele einer Schutzvorrichtung nach der Erfindung im Querschnitt dargestellt. Die Schutzvorrichtungen bestehen in den dargestellten Beispielen aus einem Schutzgehäuse 1, das ein Gehäuseunterteil 2 und ein Gehäuseoberteil 4 aufweist.

Das Schutzgehäuse 1 weist einen Bedienbereich 6 auf, hinter dem sich ein Bedienfeld 108 und ein Anzeigefeld 106 eines eingebrachten Meß- oder Anzeigegerätes 100 - nicht im Schnitt dargestellt - befindet. Der Bedienbereich 6 besteht aus einem Gehäuseabschnitt verringerter Wanddicke, so daß die Wandung im Bedienbereich 6 durch Drücken mit einem Finger 50 derart elastisch verformt werden kann, um eine am Meß- oder Anzeigegerät 100 befindliche Taste 104 durch das Schutzgehäuse 1 betätigen zu können.

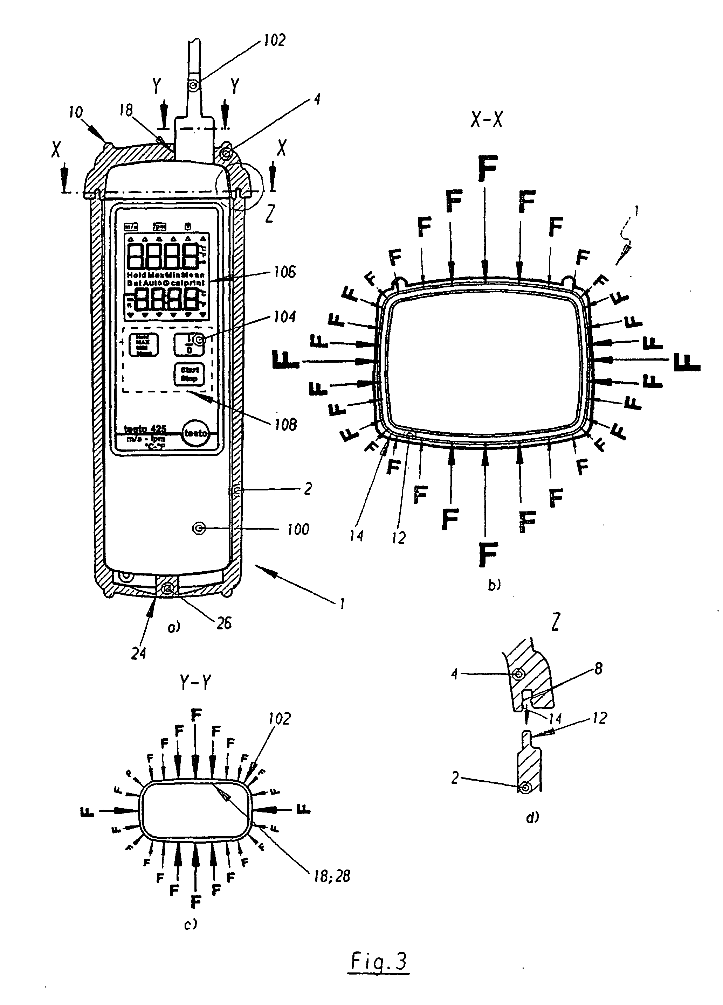

Das Gehäuseunterteil 2 weist, wie aus der Detaildarstellung Z in Fig. 3d hervorgeht, einen umlaufenden Steg 12 auf, der bei Verbindung des Gehäuseunterteils 2 mit dem Gehäuseoberteil 4 in eine am Gehäuseoberteil 4 umlaufende Nut 14 eingreift. Eine in der umlaufenden Nut 14 befindliche Dichtlippe 8, gewährleistet die Wasserdichtheit des Schutzgehäuses in den entsprechenden Bereichen.

Durch eine Öffnung 18 im Gehäuseoberteil 4 ist ein Stecker 102 des Meß- oder Anzeigegeräts 100 nach außen geführt. Eine im Bereich der Steckeröffnung 18 umlaufende Dichtlippe 28 gewährleistet eine wasserdichte Durchführung des Steckers 102 durch das Schutzgehäuses 1. Je nach Ausführungsform des Meß- oder Anzeigegeräts 100 liegt die Dichtlippe 28 wasserdichtend an dem Meß- oder Anzeigegerät 100 oder an dem Stecker 102 an, wie aus den Detaildarstellungen X und Y in Fig. 3a und 3b hervorgeht. Bei dem in Fig. 3a dargestellten Ausführungsbeispiel liegt das Gehäuse des Meß- oder Anzeigegeräts 100 wasserdichtend an dem Stecker 102 an.

Fig. 3b zeigt eine Schnittdarstellung eines Schutzgehäuses 1 entlang einer Schnittlinie X-X gemäß Fig. 3a. Fig. 3b zeigt die Nut 14 des Gehäuseoberteils 4 und die Feder 12 des Gehäuseunterteils 2 in Draufsicht. In der Figur sind ferner die sich zwischen Nut 14 und Feder 12 ergebenden Dichtkräfte F eingezeichnet, wobei das Gehäuseunterteil 2 und das Gehäuseoberteil bzw. die Nut 14 und die Feder 12 so gestaltet sind, daß die Dichtkräfte F jeweils in der Mitte der vier Seiten, an welchen die Nut 14 und die Feder 12 umlaufen, am größten sind und zu den Ecken hin abnehmen. Die Länge der die Dichtkräfte F symbolisierenden Kraftpfeile geben lediglich qualitativ den Kraftvorlauf wieder.

Fig. 3c zeigt eine Schnittdarstellung entlang einer Schnittlinie Y-Y gemäß Fig. 3a, wobei aus dieser Darstellung die Konturen des bei dieser Ausführungsform annähernd rechteckförmig ausgebildeten Steckers 102 und der Öffnung 18 des Gehäuseoberteils 4 deutlich werden. Je nach Ausführungsform wird die Kontur der Öffnung 18 durch die Dichtlippe 28 gebildet. Die Abmessungen des Steckers 102 weisen gegenüber den Abmessungen der Steckeröffnung 18 ein geringes Übermaß auf, so daß bei Einstecken des Steckers 102 in das Meß- oder Anzeigegerät '100 das Gehäuseoberteil 4 im Bereich der Steckeröffnung 18 wasserdichtend an dem Stecker 102 anliegt. Wie aus Fig. 3c hervorgeht, ist das Übermaß des Steckers 102 gegenüber der Öffnung 18 bzw. der Dichtlippe 28 in der Mitte der vier Seiten des rechteckförmig ausgebildeten Steckers 102 am größten und nimmt zu den Ecken hin ab. Damit ist gewährleistet, daß die Dichtkräfte in der Mitte der Seiten am größten sind und zu den Ecken hin abnehmen.

Das Gehäuseunterteil 2 besitzt, wie aus den Fig. 1 bis 3 deutlich wird, an einer einer Entnahmeöffnung gegenüberliegenden Seite einen Bereich 26 verringerter Wanddicke. Das in das Gehäuseunterteil eingeführte Meß- und Anzeigegerät 100 liegt mittels eines als Ansatz ausgebildeten Stößels 26 an dem Bereich 24 verringerter Wanddicke auf. Der Bereich 24 ist so gestaltet, daß er von einem Benutzer durch Aufbringen einer Kraft deformierbar ist, wobei das Meß- oder Anzeigegerät bei Deformation des Bereiches 24 über den Stößel 26 bei abgenommenem Gehäuseoberteil 4 ein Stück aus dem Gehäuseunterteil 2 herausgeschoben wird. Hierdurch ist eine Entnahme des Meß- oder Anzeigegeräts 100 aus dem Schutzgehäuse 1 erleichtert.

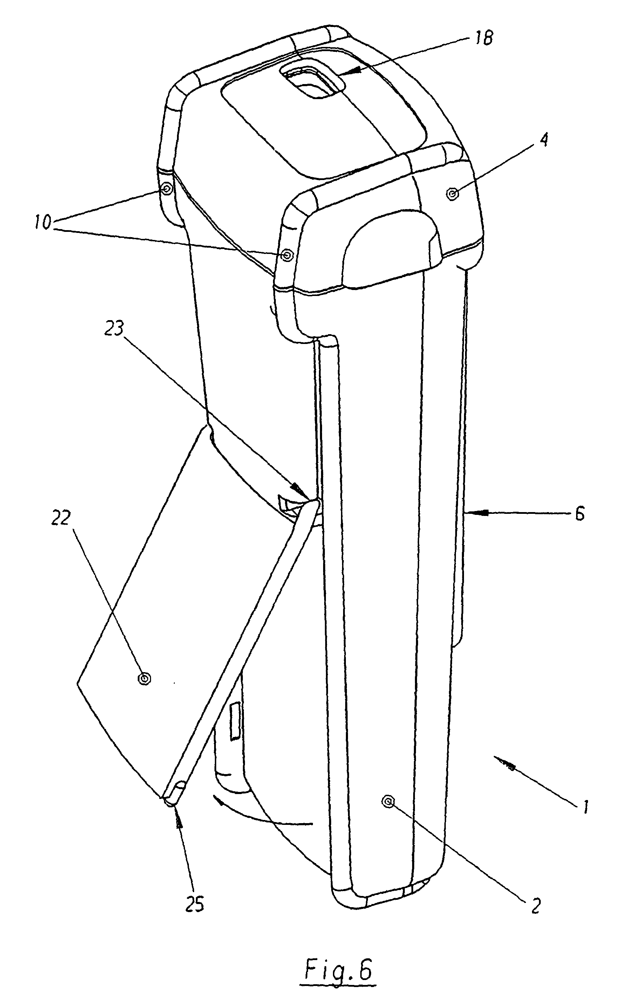

Fig. 6 zeigt eine perspektivische Ansicht einer Ausführungsform eines erfindungsgemäßen Schutzgehäuses, welches an einer dem Bedienbereich 6 gegenüberliegenden Seite einen Aufstellbügel 22 aufweist, der mittels eines Scharniers 23 aus- und einklappbar ist. In ausgeklapptem Zustand ermöglicht der Aufstellbügel 22 ein Aufstellen des Schutzgehäuses 1 auf einer Unterlage, wobei der Bedienbereich 6 in aufgestelltem Zustand vorzugsweise gegenüber der Unterlage geneigt ist, um ein einfacheres Bedienen des Meß- oder Anzeigegeräts 100 zu gewährleisten. Vorzugsweise weist der Aufstellbügel 22 an einem unteren Ende Gummiansätze 25 oder ähnliches auf, die eine ausreichende Reibung des Aufstellbügels 22 gegenüber der Unterlage gewährleisten.

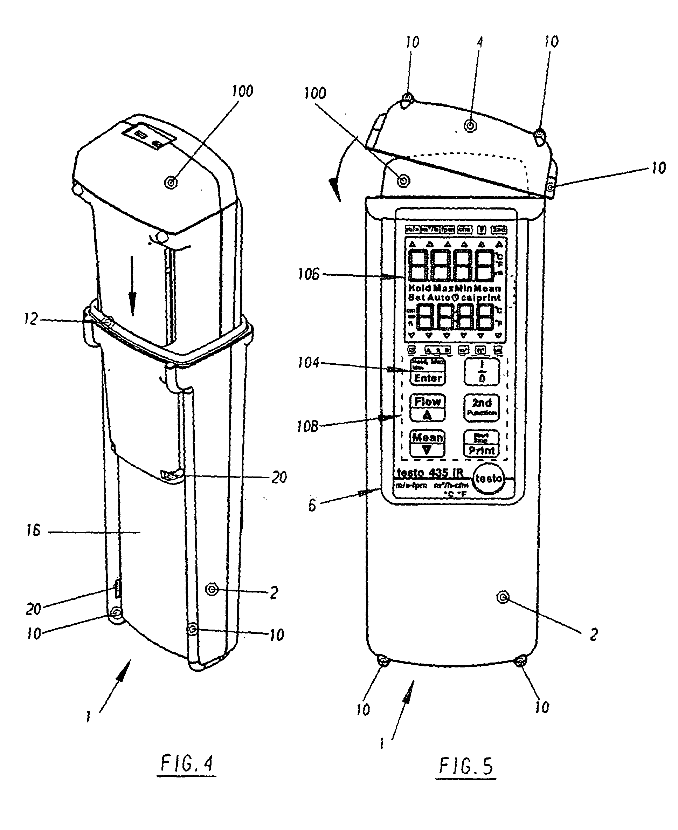

Wie besonders aus den Figuren 4 bis 6 deutlich wird, befinden sich am Schutzgehäuse Verstärkungsleisten 10, die die Verwindungssteifigkeit des Schutzgehäuses erhöhen und auch dazu dienen, das im Schutzgehäuse befindliche Meß- oder Anzeigegerät 100 zusätzlich vor äußerer Krafteinwirkung zu schützen. Wie weiter aus Figur 4 deutlich wird, befinden sich auf der dem Bedienbereich 6 abgewandten Seite 16 Aussparungen 20, die dazu dienen, das Schutzgehäuse 1 an einer an sich bekannten, hier nicht dargestellten, Halterung befestigen zu können. Vorzugsweise dienen zwei der dargestellten Aussparungen 20 wahlweise zur Befestigung des Aufstellbügels 22.

Es sei darauf hingewiesen, daß Gehäuseoberteil 4 und Gehäuseunterteil 2 nicht notwendigerweise die dargestellte Form und Größe besitzen müssen. Vielmehr sind als Gehäuseoberteil 4 und Gehäuseunterteil 2 beliebige Teile denkbar, die zusammengefügt ein ähnliches Schutzgehäuse 1 ergeben. Beispielsweise kann das Schutzgehäuse 1 nach Art zweier Schalenhälften geteilt sein, so daß das Meß- oder Anzeigegerät 100 eingelegt werden kann.

### Bezugszeichenliste

- 1: Schutzgehäuse
- 2: Gehäuseunterteil
- 4: Gehäuseoberteil
- 6: Bedienbereich
- 8: Dichtlippe

- 10: Verstärkungsleiste
- 12: Steg
- 14: Nut
- 16: dem Bedienbereich abgewandte Seite
- 18: Öffnung
- 20: Aussparungen
- 22: Aufstellbügel
- 23: Scharnier
- 24: Bereich verringerter Wanddicke
- 25: Gummiansatz
- 26: Stößel
- 28: Dichtlippe

- 50: Finger

- 100: Meß- oder Anzeigegerät
- 102: Stecker
- 104: Taste
- 106: Anzeigefeld
- 108: Bedienfeld

## Patentansprüche

1. Wasserdichte Schutzvorrichtung mit einem darin aufgenommenen herausnehmbaren Meß- oder Anzeigegerät (100), das ein Gehäuse, ein Anzeigefeld (106) und/oder ein Bedienfeld (108) aufweist, wobei die Schutzvorrichtung als Schutzgehäuse (1) (Holster) aus einem formstabilen Material gefertigt ist, wobei die Innenkontur des Schutzgehäuses (1) derart gestaltet ist, daß das Meß- oder Anzeigegerät (100) weitgehend spielfrei einsetzbar ist, und wobei das Schutzgehäuse eine verschließbare Öffnung und einen transparenten elastisch nachgebenden Bedienbereich (6) aufweist.

2. Schutzvorrichtung nach Anspruch 1, **dadurch gekennzeichnet, daß** sie aus einem Gehäuseunterteil (2) und einem Gehäuseoberteil (4) besteht, die lösbar miteinander verbunden sind.

3. Schutzvorrichtung nach Anspruch 2, **dadurch gekennzeichnet, daß** das Gehäuseunterteil (2) und Gehäuseoberteil (4) jeweils eine umlaufende Nut (14) bzw. einen umlaufenden Steg (12) aufweisen, derart, daß beim Aufstecken des Gehäuseoberteils (4) auf das Gehäuseunterteil (2) der Steg (12) in die Nut (14) dichtend eingreift.

4. Schutzvorrichtung nach Anspruch 3, **dadurch gekennzeichnet, daß** an der Nut (14) und/oder an dem Steg (12) Dichtlippen (8) angebracht sind.

5. Schutzvorrichtung nach einem der Ansprüche 2 bis 4, **dadurch gekennzeichnet, daß** das Gehäuseoberteil (4) mittels eines Scharniers am Gehäuseunterteil (2) befestigt ist.

6. Schutzvorrichtung nach einem der vorangehenden Ansprüche, **dadurch gekennzeichnet, daß** der Bedienbereich (6) aus einem Gehäuseabschnitt verringerter Wanddicke besteht.

7. Schutzvorrichtung nach einem der vorangehenden Ansprüche, **dadurch gekennzeichnet, daß** der Bedienbereich (6) durch Fingerdruck ausreichend elastisch deformierbar ist, um Tasten (104) des eingesetzten Meß- oder Anzeigegerätes(100) betätigen zu können.

8. Schutzvorrichtung nach einem der vorangehenden Ansprüche, **dadurch gekennzeichnet, daß** der Bedienbereich (6) einstückig mit dem Schutzgehäuse (1) aus demselben Material gefertigt ist.

9. Schutzvorrichtung nach einem der vorangegangenen Ansprüche, **dadurch gekennzeichnet, daß** sie vollständig transparent ist.

10. Schutzvorrichtung nach einem der vorangehenden Ansprüche, **dadurch gekennzeichnet, daß** sie vorzugsweise auf der dem Bedienbereich (6) abgewandten Seite (16), Aussparungen (20) zum Befestigen an einer zugehörigen Halterung aufweist.

11. Schutzvorrichtung nach einem der vorangehenden Ansprüche, **dadurch gekennzeichnet, daß** sie vorzugsweise auf der dem Bedienbereich (6) abgewandten Seite einen Aufstellbügel (22) aufweist, der mittels eines Scharniers (23) an dem Schutzgehäuse (1) befestigt ist.

12. Schutzvorrichtung nach einem der vorangehenden Ansprüche, **dadurch gekennzeichnet, daß** sie mindestens eine Verstärkungsleiste (10) aufweist, die aus demselben Material wie das Schutzgehäuse (1) besteht.

13. Schutzvorrichtung nach einem der vorhergehenden Ansprüche, **dadurch gekennzeichnet, daß** sie eine Steckeröffnung (18) aufweist.

14. Schutzvorrichtung nach Anspruch 13, **dadurch gekennzeichnet, daß** im Bereich der Steckeröffnung (18) eine umlaufende Dichtlippe (28) angeordnet ist.

15. Schutzvorrichtung nach einem der vorangehenden Ansprüche, **dadurch gekennzeichnet, daß** das Gehäuseunterteil (2) an einer einer Entnahmeöffnung gegenüberliegenden Seite einen Bereich (24) reduzierter Wanddicke aufweist, der elastisch deformierbar ist, um das Meß- oder Anzeigegerät (100) zur Entnahme teilweise aus dem Gehäuseunterteil (2) herausschieben zu können.

16. Schutzvorrichtung nach Anspruch 15, **dadurch gekennzeichnet, daß** das eingesetzte Meß- oder Anzeigegerät (100) mittels eines Stößels (26) an dem Bereich (24) anliegt.

## Claims

1. A watertight protective device with a removable measuring or display device (100) accommodated therein, which measuring or display device comprises a housing, a display panel (106) and/or an operating panel (108), wherein the protective device is produced as a protective housing (1) (holster) from a dimensionally stable material, wherein the inner contour of the protective housing (1) is shaped in such a manner that the measuring or display device (100) can be inserted largely without play, and wherein the protective housing comprises a sealable opening and a transparent elastically flexible operating area (6).

2. A protective device according to Claim 1,
**characterised in that** it consists of a lower housing part (2) and an upper housing part (4), which are detachably connected to each other.

3. A protective device according to Claim 2,
**characterised in that** the lower housing part (2) and the upper housing part (4) each comprise a circumferential groove (14) and a circumferential web (12) in such a manner that the web (12) engages tightly in the groove (14) when the upper housing part (4) is fitted onto the lower housing part (2).

4. A protective device according to Claim 3,
**characterised in that** sealing lips (8) are mounted on the groove (14) and/or on the web (12).

5. A protective device according to one of Claims 2 to 4,
**characterised in that** the upper housing part (4) is fixed to the lower housing part (2) by means of a hinge.

6. A protective device according to one of the preceding Claims,
**characterised in that** the operating area (6) consists of a housing portion of reduced wall thickness.

7. A protective device according to one of the preceding Claims,
**characterised in that** the operating area (6) is sufficiently elastically deformable by finger pressure so that push buttons (104) on the inserted measuring or display device (100) can be operated.

8. A protective device according to one of the preceding Claims,
**characterised in that** the operating area (6) is produced in one piece with the protective housing (1) and from the same material.

9. A protective device according to one of the preceding Claims,
**characterised in that** it is completely transparent.

10. A protective device according to one of the preceding Claims,
**characterised in that** it preferably comprises recesses (20) for fixing it to an associated mounting on the side (16) facing away from the operating area (6).

11. A protective device according to one of the preceding Claims,
**characterised in that** on the side facing away from the operating area (6) it preferably comprises a stand (22), which is fixed to the protective housing (1) by means of a hinge (23).

12. A protective device according to one of the preceding Claims,
**characterised in that** it comprises at least one reinforcing strip (10), which is made from the same material as the protective housing (1).

13. A protective device according to one of the preceding Claims,
**characterised in that** it comprises a plug opening (18).

14. A protective device according to Claim 13,
**characterised in that** a circumferential sealing lip (28) is disposed in the region of the plug opening (18).

15. A protective device according to one of the preceding Claims,
**characterised in that** at a side opposite a removal opening the lower housing part (2) comprises an area (24) of reduced wall thickness which is elastically deformable so that the measuring or display device (100) can be partially pushed out of the lower housing part (2) for removal.

16. A protective device according to Claim 15,
**characterised in that** the inserted measuring or display device (100) abuts the area (24) by means of a pusher (26).

## Revendications

1. Dispositif protecteur étanche à l'eau comportant un appareil de mesure et d'affichage (100) qui y est inséré à l'intérieur et qui présente un boîtier, un panneau d'affichage (106) et/ou un panneau de commande (108), le dispositif protecteur étant fabriqué sous forme de boîtier protecteur (1) (étui) en un matériau indéformable, le contour intérieur du boîtier protecteur (1) étant formé de telle sorte que l'appareil de mesure et d'affichage (100) peut être inséré pratiquement sans jeu et le boîtier protecteur présentant une ouverture verrouillable et une zone de commande (6) flexible élastique et transparente.

2. Dispositif protecteur selon la revendication 1,
**caractérisé en ce qu'**
il se compose d'une partie inférieure de boîtier (2) et d'une partie supérieure de boîtier (4) qui sont assemblées l'une à l'autre de façon détachable.

3. Dispositif protecteur selon la revendication 2,
**caractérisé en ce que**
la partie inférieure de boîtier (2) et la partie supérieure de boîtier (4) présentent respectivement une rainure (14) périphérique ou une nervure (12) périphérique, de telle manière que la nervure (12) a prise dans la rainure (14) de façon étanche lorsqu'on place la partie supérieure de boîtier (4) sur la partie inférieure de boîtier (2).

4. Dispositif protecteur selon la revendication 3,
**caractérisé en ce que**
des lèvres d'étanchéité (8) sont appliquées sur la rainure (14) et/ou sur la nervure (12).

5. Dispositif protecteur selon l'une des revendications 2 à 4,
**caractérisé en ce que**
la partie supérieure de boîtier (4) est fixée à la partie inférieure de boîtier (2) à l'aide d'une charnière.

6. Dispositif protecteur selon l'une des revendications précédentes,
**caractérisé en ce que**
la zone de commande (6) est constituée par un segment de boîtier dont l'épaisseur de paroi est réduite.

7. Dispositif protecteur selon l'une des revendications précédentes,
**caractérisé en ce que**
la zone de commande (6) peut être déformée élastiquement de façon suffisante par pression du doigt pour qu'on puisse manipuler des touches (104) de l'appareil de mesure et d'affichage (100) inséré.

8. Dispositif protecteur selon l'une des revendications précédentes,
**caractérisé en ce que**
la zone de commande (6) est fabriquée en une seule pièce avec le boîtier protecteur (1) et dans le même matériau.

9. Dispositif protecteur selon l'une des revendications précédentes,
**caractérisé en ce qu'**
il est complètement transparent.

10. Dispositif protecteur selon l'une des revendications précédentes,
**caractérisé en ce qu'**
il présente, de préférence du côté (16) opposé à la zone de commande (6), des cavités (20) destinées à la fixation à un support correspondant.

11. Dispositif protecteur selon l'une des revendications précédentes,
**caractérisé en ce qu'**
il présente, de préférence du côté (16) opposé à la zone de commande (6), un étrier de pose (22) qui est fixé au boîtier protecteur (1) à l'aide d'une charnière (23).

12. Dispositif protecteur selon l'une des revendications précédentes,
**caractérisé en ce qu'**
il présente au moins une bande de renforcement (10) constituée du même matériau que le boîtier protecteur (1).

13. Dispositif protecteur selon l'une des revendications précédentes,
**caractérisé en ce qu'**
il présente une ouverture de fiche (18).

14. Dispositif protecteur selon la revendication 13,
**caractérisé en ce qu'**
une lèvre d'étanchéité (28) périphérique est disposée dans la zone de l'ouverture de fiche (18).

15. Dispositif protecteur selon l'une des revendications précédentes,
**caractérisé en ce que**
sur un côté opposé à une ouverture d'extraction, la partie inférieure de boîtier (2) présente une zone (24) dont l'épaisseur de paroi est réduite et qui est élastiquement déformable pour pouvoir sortir l'appareil de mesure et d'affichage (100) afin de l'extraire partiellement de la partie inférieure de boîtier (2).

16. Dispositif protecteur selon la revendication 15,
**caractérisé en ce que**
l'appareil de mesure et d'affichage (100) inséré repose sur la zone (24) à l'aide d'un poussoir (26).
